# FASCICULE DE BREVET EUROPEEN

(11) **EP 3 433 067 B1**
(45) Date de publication et mention de la délivrance du brevet: **18.12.2019**
(21) Numéro de dépôt: 17720537.4
(22) Date de dépôt: 16.03.2017
(51) Int. Cl.: B29C 45/14, B29C 45/00, B29L 31/00

(54) **PROCEDE DE FABRICATION D'UN RÉCIPIENT COMPRENANT UNE POCHE SOUPLE ET UNE COQUE RIGIDE ET UN TEL RÉCIPIENT**
VERFAHREN ZUR HERSTELLUNG EINES BEHÄLTERS MIT EINER WEICHEN HAUT UND EINEM FESTEN KERN UND SELBIGER BEHÄLTER
PROCESS FOR MANUFACTURING A CONTAINER WITH A SOFT SKIN AND A RIGID CORE AND SUCH A CONTAINER

(30) Priorité: 21.03.2016 FR 1652425
(43) Date de publication de la demande: 30.01.2019
(73) Titulaire: APTAR France SAS, 27110 Le Neubourg (FR)
(72) Inventeur: DUQUET, Frédéric, 78121 Crespières (FR); BRUDER, Thomas, 78467 Konstanz (DE)
(74) Mandataire: CAPRI
(86) Numéro de dépôt international: PCT/FR2017/050609
(87) Numéro de publication internationale: WO 2017/162958

(56) Documents cités:
- WO-A1-2012/136935
- DE-A1-102013 226 952
- DE-B1- 1 629 710
- JP-A- H01 247 126

## Description

La présente invention concerne un procédé de fabrication d'un récipient, comprenant une poche souple et une coque rigide, destiné à être associé à un organe de distribution, tel qu'une pompe ou une valve, pour constituer un distributeur de produit fluide. De tels distributeurs sont fréquemment utilisés dans les domaines de la cosmétique, de la parfumerie ou encore de la pharmacie pour distribuer des produits fluides de viscosités variées, tels que des crèmes, des gels, des lotions, des parfums, etc.

Dans l'art antérieur, il existe plusieurs techniques et architectures permettant de disposer une poche souple à l'intérieur d'une coque externe rigide.

Dans le document FR-2 800 718, une poche souple réalisée à partir de feuilles composites d'aluminium et de matière plastique est soudée sur un support de poche rigide au niveau de son ouverture. Le support de poche est engagé dans une coque externe rigide de manière à pouvoir monter une pompe de distribution qui prélève le produit fluide contenu dans la poche souple.

On connaît également le document EP-0 505 611 décrivant un distributeur comprenant une poche souple associée à une coque intérieure rigide de manière à imposer la déformation de la poche par retroussement à la manière d'une chaussette. Un distributeur comparable est également décrit dans le document EP-1 549 567.

Le document EP-0 532 873 décrit un procédé de co-extrusion soufflage avec un récipient externe sensiblement indéformable et une poche interne déformable. Le récipient et la poche se composent de matières thermoplastiques différentes non jointes par soudure, c'est-à-dire chimiquement et physiquement incompatibles. En d'autres termes, la poche interne est simplement disposée à l'intérieur du récipient externe sans aucune liaison chimique ou physique entre eux.

On connaît également les documents GB1472179 et DE3432253 qui décrivent une poche souple interne et une coque rigide externe réalisées de manière monobloc.

Dans le document WO2008/010600, de la résine en fusion est surmoulée sur un corps creux, alors qu'il est rempli d'un fluide.

Le document DE 1629 710 B1 décrit un procédé de moulage par injection avec un insert pour la fabrication d'un récipient, comprenant une poche souple et une coque rigide.

Ainsi, il n'existe aucune technologie simple pour réaliser un récipient comprenant une poche souple interne disposée dans une coque externe rigide.

La présente invention a pour but de remédier à ces lacunes de l'art antérieur en définissant un procédé de fabrication qui permet de réaliser un récipient de manière simple et rapide avec une poche souple quelconque et une coque externe rigide ayant une forme extérieure quelconque.

Pour ce faire, la présente invention prévoit un procédé de fabrication d'un récipient, comprenant une poche souple et une coque rigide, destiné à être associé à un organe de distribution, tel qu'une pompe ou une valve, pour constituer un distributeur de produit fluide, le procédé comprenant les étapes suivantes :
- fournir un noyau ayant une paroi externe,
- engager la poche souple autour du noyau de sorte qu'elle recouvre au moins une partie de la paroi externe,
- fournir un moule ayant une paroi interne définissant une cavité interne,
- disposer le noyau, avec sa poche souple engagée autour, dans la cavité interne du moule, de manière à définir un espace d'injection entre la paroi interne et la poche souple,
- injecter une matière plastique en fusion dans l'espace d'injection de manière à former la coque rigide autour de la poche souple, la poche souple et la coque rigide étant réalisées avec deux matières plastiques différentes qui sont chimiquement incompatibles, de sorte que la poche souple puisse se décoller de la coque rigide.

L'incompatibilité chimique peut être intrinsèque, c'est-à-dire intégrée à la poche et à la coque sans élément supplémentaire : l'interface de contact entre la poche et la coque assurant alors à elle seule la non-adhérence entre les deux pièces.

L'incompatibilité chimique peut aussi être extrinsèque, c'est-à-dire ajoutée ou associée à la poche : une poche réalisée à partir d'un complexe laminé peut comprendre une couche de décollement distincte.

Ainsi, la présente invention définit également un procédé de fabrication d'un récipient dont la poche et la coque définissant entre elles une interface de décollement permettant à la poche souple de se décoller de la coque rigide.

On peut ainsi dire que la coque rigide est surmoulée sur la poche souple dont la forme, lors de l'injection, est définie par le noyau. La matière plastique en fusion est bien entendu injectée sous pression dans l'espace d'injection de sorte que la poche souple a tendance à être plaquée contre le noyau. Par conséquent, le noyau a une fonction de support rigide pour la poche souple lors de l'injection. Le noyau permet de conférer à la poche une forme souhaitée qu'elle va conserver une fois la coque rigide surmoulée. A l'usage, la poche se décollera de la coque rigide à mesure que du produit fluide en est extrait.

Selon une caractéristique intéressante de l'invention, la paroi interne du moule a une forme différente de la paroi externe du noyau. Ainsi, la coque rigide externe peut présenter une configuration ou forme externe qui est totalement indépendante de la forme de la poche souple qui est définie par le noyau. Cette décorrélation entre l'intérieur et l'extérieur de la coque rigide permet une grande souplesse au niveau de l'aspect esthétique que l'on veut conférer au récipient.

Selon un aspect technique avantageux de l'invention, la poche souple est élastiquement déformable, de sorte qu'une fois engagée autour du noyau, elle épouse la paroi externe du noyau sans former de plis. On peut alors comparer la poche souple à une chaussette qui est enfilée, avec une certaine déformation radiale, sur le noyau. On garantit ainsi que la forme de la poche est en tout point conforme à la forme du noyau.

Selon une caractéristique avantageuse de l'invention, la poche souple forme au moins un appendice de maintien qui fait saillie dans l'espace d'injection, de manière à être noyé et pris dans la matière plastique constitutive de la coque rigide. Cet appendice de maintien peut présenter des formes très diverses, comme par exemple une lame mince droite, un profil en cornière, un profil en zigzag, un profil épaissi, etc. Le but de cet appendice de maintien est de réaliser un point de fixation mécanique entre la poche souple et la coque rigide. L'appendice de maintien peut par exemple être réalisé au niveau de l'ouverture du récipient, et ceci de manière périphérique pour réaliser une étanchéité. L'appendice de maintien peut également servir à contrôler la déformation de la poche souple à l'intérieur de la coque rigide. Par exemple, la poche souple peut comprendre deux appendices de maintien qui s'étendent de manière diamétralement opposée de chaque côté de la poche souple, pour induire une déformation déterminée de la poche souple à mesure qu'elle s'écrase sur elle-même. Il est également envisageable de former un appendice de maintien au niveau du fond de la poche. Il est avantageux de prévoir que l'appendice de maintien soit entouré par la coque rigide sur au moins 180° pour assurer un bon ancrage mécanique.

Selon un autre aspect avantageux de l'invention, un profil saillant, avantageusement élastiquement déformable, est solidaire du moule ou du noyau, ce profil saillant est destiné à venir en contact de la poche souple, lorsque la matière plastique en fusion est injectée dans l'espace d'injection, de manière à former un orifice ou passage d'éventation dans la coque rigide qui va permettre à de l'air extérieur de pénétrer entre la poche souple et la coque rigide à mesure que la poche souple s'écrase sur elle-même, la poche souple présentant avantageusement une épaisseur de paroi accrue à l'endroit où le profil saillant vient en contact de la poche souple. Le profil saillant peut être situé à n'importe quel endroit de la paroi interne du moule, mais de préférence il est situé au niveau du fond de la cavité interne du moule, et fait saillie selon l'axe de déplacement du noyau par rapport au moule. Ce profil saillant peut se présenter sous la forme d'un petit téton, d'une broche ou encore sous la forme d'une nervure. On peut prévoir plusieurs profils saillants pour réaliser plusieurs orifices d'éventation. Il est avantageux de réaliser le profil saillant avec un matériau élastiquement déformable, afin d'éviter tout endommagement de la poche souple. Il est également envisageable de réaliser le profil saillant avec une matière rigide et de réaliser le noyau, au moins partiellement, avec un matériau souple qui peut être déformé par le profil saillant rigide, ceci toujours dans le même but d'éviter tout endommagement de la poche souple. On peut aussi envisager de prévoir un profil saillant monté sur ressort pour limiter sa force d'appui contre la poche souple. Bien entendu, une épaisseur accrue de la poche souple au niveau où le profil saillant vient en contact permet d'éviter tout endommagement de la poche, même si le profil saillant est appuyé avec une force importante contre la poche souple. Un passage d'éventation peut également être formée au moyen d'une broche coulissante montée sur le noyau et pouvant s'étendre le long de la poche souple lors de l'injection.

Selon une autre caractéristique avantageuse de l'invention, le noyau comprend au moins un conduit interne qui débouche au niveau de la paroi externe. Ce conduit interne peut par exemple comprendre un conduit central commun qui se divise ensuite en plusieurs conduits secondaires qui débouchent en plusieurs endroits au niveau de la paroi externe du noyau. Selon une première utilisation, une dépression est générée dans le conduit interne pour plaquer la poche souple contre la paroi externe du noyau. On garantit ainsi que la poche souple a la même forme que celle du noyau, particulièrement dans le cas où la poche souple est réalisée avec un matériau qui n'est pas élastiquement déformable. Selon une autre utilisation, un fluide est injecté sous pression dans le conduit interne pour pousser localement la poche souple en contact du moule, de manière à former un orifice d'éventation dans la coque rigide qui va permettre à de l'air extérieur de pénétrer entre la poche souple et la coque rigide à mesure que la poche souple s'écrase sur elle-même. On peut par exemple prévoir un profil saillant, tel que défini ci-dessus, en regard de la sortie du conduit interne, de sorte que le déplacement de la poche souple sous la pression du fluide peut être minime, par exemple de l'ordre du dixième de millimètre. Selon une troisième utilisation, un fluide est injecté sous pression dans le conduit interne pour décoller le récipient du noyau, une fois la coque rigide figée. En d'autres termes, l'injection de fluide sous pression permet d'éjecter le récipient du noyau.

L'esprit de l'invention réside dans le fait de surmouler une coque rigide sur une poche souple supportée par un noyau. L'injection de la coque rigide permet en outre de maintenir mécaniquement la poche souple à l'intérieur de la coque rigide, au moyen d'appendices de maintien noyés et pris dans la masse constitutive de la coque rigide. On se sert également du moule et du noyau pour réaliser un ou plusieurs orifices ou passages d'éventation, qui n'ont par conséquent pas besoin d'être réalisés ultérieurement. Le conduit interne du noyau permet de remplir plusieurs fonctions, à savoir celle de plaquage de la poche sur le noyau, celle de formation de l'orifice d'éventation, ou encore celle d'éjection du récipient du noyau.

La présente invention définit également un ensemble de moulage comprenant un noyau et un moule tel que défini ci-dessus, pour mettre en œuvre le procédé de fabrication. En effet, cet ensemble de moulage est original, puisqu'il permet de surmouler une coque rigide sur une poche souple en se servant du noyau comme support de poche souple. De plus, le profil saillant pour former l'orifice d'éventation et le conduit interne du noyau sont des caractéristiques particulières.

Bien entendu, le récipient réalisé selon le procédé de l'invention fait également partie d'un objet de l'invention, tout particulièrement en ce que l'appendice de maintien est entouré par la coque rigide sur au moins 180°. L'orifice ou passage d'éventation issu du surmoulage et donnant sur la poche souple est une autre caractéristique particulière du récipient réalisé selon le procédé de l'invention.

Enfin, la présente invention a également pour objet un distributeur de produit fluide comprenant un récipient réalisé selon le procédé de l'invention, et un organe de distribution, tel qu'une pompe ou une valve, qui est monté sur le récipient de manière étanche, l'organe de distribution venant en contact avec la poche souple, en l'appuyant contre la coque rigide de sorte que la poche souple est ainsi maintenue dans la coque rigide. Dans ce cas, il n'est pas nécessaire de maintenir la poche souple dans la coque rigide lors de l'opération d'injection. En d'autres termes, on se sert du montage de l'organe de distribution pour fixer la poche souple dans la coque rigide.

L'invention sera maintenant plus amplement décrite en référence aux dessins joints, donnant à titre d'exemples non limitatifs, plusieurs modes de réalisation de l'invention.

Sur les figures :
La figure 1a est une vue en section transversale schématique à travers un moule et un noyau revêtu d'une poche souple prêt à être introduit dans le moule, selon une première forme de réalisation de l'invention,
La figure 1b est une vue similaire à la figure 1a avec le noyau introduit dans la cavité du moule de manière à former un espace d'injection qui est injecté de matière plastique en fusion pour former la coque rigide,
La figure 1c est une vue similaire à la figure 1a avec le noyau extrait du moule et supportant le récipient selon une première forme de réalisation de l'invention,
La figure 1d est une vue similaire aux précédentes représentant le récipient de l'invention retiré du noyau,
La figure 2a est une vue similaire à la figure 1a pour un deuxième mode de réalisation de l'invention,
La figure 2b est une vue similaire à la figure 1a pour ce deuxième mode de réalisation de l'invention,
La figure 2c est une vue sensiblement similaire à la figure 1c pour ce deuxième mode de réalisation,
La figure 3a est une vue similaire à la figure 1a pour un troisième mode de réalisation de l'invention,
La figure 3b est une vue similaire à la figure 1b pour ce troisième mode de réalisation de l'invention,
La figure 3c est une vue sensiblement similaire à la figure 1d pour ce troisième mode de réalisation de l'invention,
La figure 4a est une vue similaire à la figure 1a pour un quatrième mode de réalisation de l'invention,
La figure 4b est une vue similaire à la figure 1b pour ce quatrième mode de réalisation de l'invention,
La figure 4c est une vue en coupe selon un plan perpendiculaire à travers la configuration de la figure 4b,
La figure 4d est une vue sensiblement similaire à la figure 1d pour ce quatrième mode de réalisation de l'invention,
La figure 5a est une vue similaire à la figure 1a pour un cinquième mode de réalisation de l'invention,
La figure 5b est une vue similaire à la figure 1b pour ce cinquième mode de réalisation de l'invention,
La figure 5c est une vue sensiblement similaire à la figure 1d pour ce cinquième mode de réalisation de l'invention,
La figure 6 est une vue schématique représentant un distributeur de produit fluide mettant en œuvre un récipient réalisé selon l'invention,
La figure 7a est une vue en coupe transversale sensiblement similaire à la figure 4c dans le but de représenter des appendices de maintien, et
Les figures 7b, 7c et 7d représentent des variantes de réalisation pour des appendices de maintien.

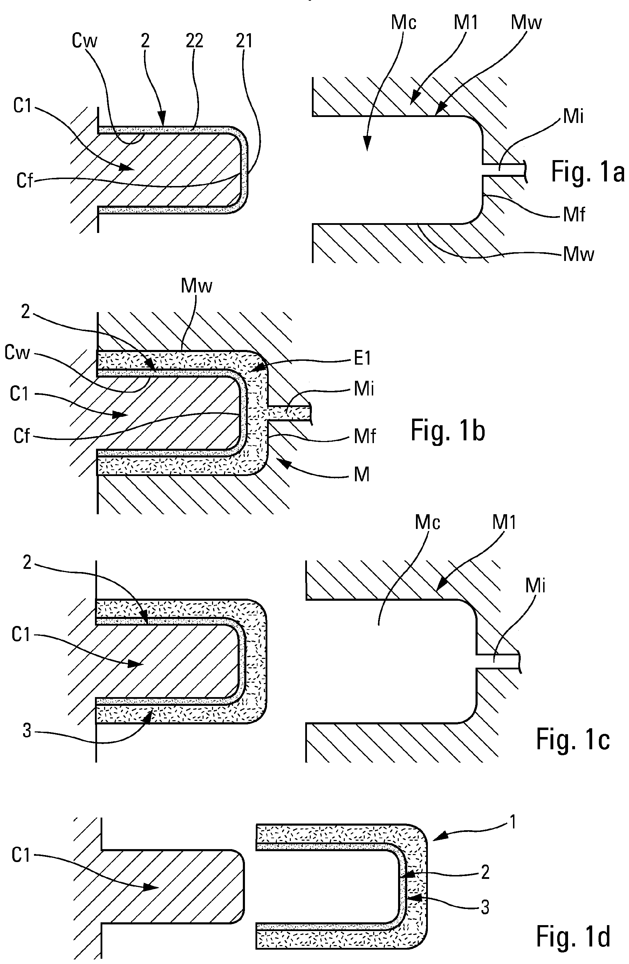

On se référera tout d'abord aux figures 1a à 1d pour expliquer le premier mode de réalisation de l'invention. L'invention concerne un procédé de fabrication d'un récipient comprenant une poche souple interne 2 et une coque rigide externe 3, mais elle concerne également les outils nécessaires pour la mise en œuvre de ce procédé de fabrication, à savoir un moule M1 et un noyau C1. Le résultat de la mise en œuvre du procédé de fabrication de l'invention grâce à ce moule M et ce noyau C1 est un récipient 1, qui fait également partie de l'invention.

Le moule M1 définit une cavité Mc définissant une paroi interne comprenant une paroi de fond Mf et une paroi latérale Mw. La paroi de fond Mf est de préférence plane, afin que le récipient puisse tenir debout de manière sable. Cependant, la paroi latérale Mw peut présenter une forme quelconque, en fonction de l'effet esthétique recherché. Une canule d'injection Mi débouche dans la cavité Mc, par exemple au niveau du fond Mf. Il n'est pas exclu de prévoir plusieurs canules d'injection. On peut voir sur la figure 1a que la cavité Mc est largement ouverte sur l'extérieur. Le moule M1 est ici représenté comme formant une pièce unique monobloc. Toutefois, il est possible de réaliser le moule M1 en plusieurs parties, qui une fois assemblées, constituent la cavité Mc. La formation du moule M1 en plusieurs parties est notamment nécessaire lorsque la paroi latérale Mw présente une géométrie complexe interdisant un démoulage purement axial.

Le noyau C1 comprend une broche saillante formant une paroi externe comprenant une paroi de fond Cf et une paroi latérale Cw. La paroi latérale Cw est de préférence cylindrique ou conique. La paroi de fond Cf peut être de configuration quelconque.

Selon l'invention, une poche souple 2 est disposée autour du noyau C1 en épousant sensiblement sa paroi externe. Cette poche souple 2 peut être réalisée d'une manière quelconque : il peut s'agir d'une poche réalisée en un matériau élastiquement déformable, une poche soufflée, une poche réalisée à partir d'un complexe laminé. Le type particulier de la poche souple n'est pas critique pour la présente invention. Toutefois, de bons résultats sont obtenus avec une poche élastiquement déformable qui permet d'épouser de manière intime la paroi externe du noyau C1 sans former de plis. On peut voir sur la figure 1a que la poche souple 2 recouvre la totalité de la paroi externe du noyau C1. En variante non représentée, la poche 2 ne pourrait s'étendre que sur une partie de ce noyau C1.

En se référant à la figure 1b, on voit que le noyau C1, avec sa poche 2 engagée autour, est inséré à l'intérieur de la cavité Mc du moule M1. Un espace d'injection E1 est ainsi défini entre la paroi interne du moule M1 et la poche souple 2. Selon l'invention, cet espace d'injection E1 est rempli d'une matière plastique en fusion à travers la canule d'injection Mi. La cavité E1 est de préférence entièrement remplie de matière plastique en fusion. Cette matière plastique est chimiquement et physiquement incompatible avec celle constituant la poche souple 2, de sorte qu'il n'y a pas de liaison chimique ni physique entre les deux matières plastiques. On peut voir sur la figure 1b que la matière plastique injectée dans l'espace d'injection E1 entoure complètement de l'extérieur la poche souple 2. Etant donné que la matière plastique est injectée sous pression dans l'espace d'injection E1, elle a tendance à plaquer la poche souple 2 contre la paroi externe du noyau C1. Bien que non représenté, le noyau C1 peut comprendre des chemins d'éventation permettant d'évacuer l'air initialement présent entre la poche souple 2 et le noyau C1.

Une fois la matière plastique durcie ou figée, le noyau C1 peut être retiré de la cavité Mc du moule M1. On peut voir sur la figure 1c que la poche souple 2 et la coque rigide externe 3 restent sur le noyau C1 extrait du moule M1. En variante non représentée, il est possible d'imaginer que le noyau C1 soit retiré du moule M1 avec la poche souple 2 et la coque rigide 3 restant à l'intérieur de la cavité Mc.

Finalement, le récipient 1 est retiré du noyau C1, comme représenté sur la figure 1d. Le récipient C1 est constitué d'une poche souple interne 2 qui est appliquée à l'intérieur d'une coque rigide externe 3. La forme de la poche 2 peut être différente de la paroi externe de la coque rigide 3. La poche 2 reste en contact avec la coque 3, mais peut en être détachée ou décollée sans l'endommager.

En résumé, le noyau C1 sert de support solide pour la poche souple 2 sur laquelle est surmoulée la coque rigide 3 au moyen du moule M1.

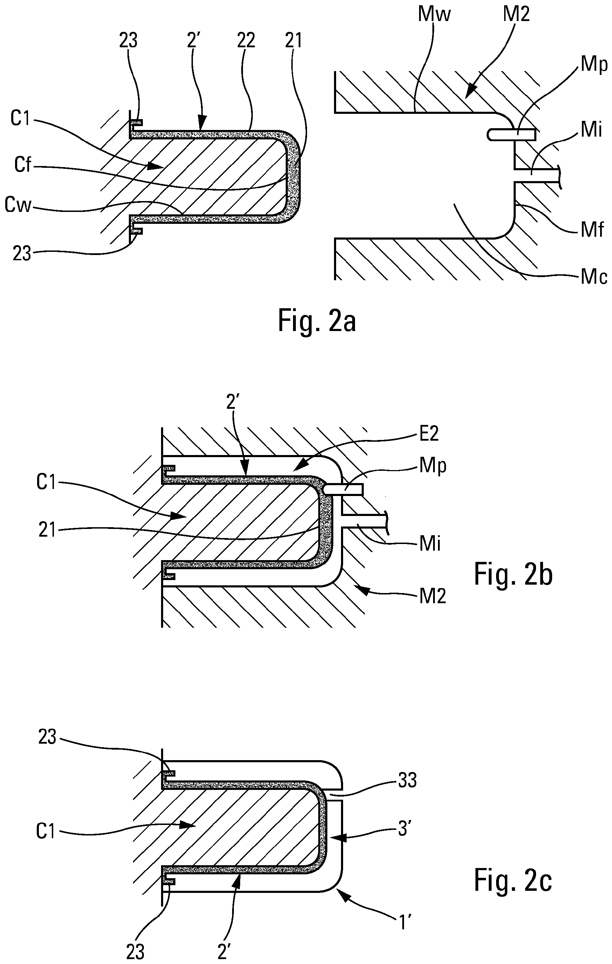

On se référera maintenant aux figures 2a, 2b et 2c pour décrire un deuxième mode de réalisation de l'invention. Le noyau C1 peut être identique à celui du premier mode de réalisation. La poche souple 2' diffère de celle du premier mode de réalisation en ce qu'elle comprend une collerette annulaire supérieure 23 qui forme un rabat vers le bas. Cette collerette annulaire va remplir une fonction d'appendice de maintien pour ancrer l'ouverture de la poche 2' dans la coque rigide 3'.

Le moule M2 est sensiblement similaire au moule M1, excepté qu'il comprend en plus une petite broche Mp qui fait saillie à l'intérieur de la cavité Mc à partir du fond Mf. En variante, cette broche Mp aurait également pu être disposée au niveau de la paroi latérale Mv.

Une autre particularité de la poche 2' est qu'elle comprend un fond renforcé 21 qui présente une épaisseur de paroi accrue.

Le noyau C1 avec sa poche souple 2' sont introduits dans le moule M2 de manière à ce que la broche Mp vienne en contact appuyé avec le fond 21 de la poche souple. Du fait que le fond 21 est renforcé, l'appui de la broche Mp peut être important sans risquer de percer la poche. Bien entendu, il est possible de mettre en œuvre la broche Mp avec la poche souple 2 du premier mode de réalisation, mais il faudra alors veiller à ce qu'elle n'endommage pas la poche. On peut par exemple prévoir que la broche Mp est réalisée en matériau souple déformable. En variante, on peut également envisager de monter la broche Mp sur un ressort, afin de limiter sa force d'appui contre la poche souple. Dans tous les cas, la broche Mp vient en contact de la poche souple sans la percer. Sur la figure 2b, on peut voir qu'un espace d'injection E2 est formé autour de la poche 2'. Cet espace d'injection est injecté de matière plastique en fusion à travers la canule d'injection Mi. Tout comme dans le premier mode de réalisation, la matière plastique injectée est incompatible chimiquement et physiquement avec celle qui constitue la poche souple 2'. Une fois la matière plastique figée, le noyau C1 peut être retiré du moule M2 avec le récipient 1' monté dessus. On peut voir sur la figure 2c que la coque rigide 3' comprend un trou d'éventation 33 qui fait communiquer la poche souple 2' avec l'extérieur à travers la coque rigide 3'. Ce trou d'éventation 33 a été formé par la broche Mp. On peut également remarquer que la collerette 23 est noyée dans la matière constitutive de la coque rigide 3', formant ainsi un appendice de maintien qui permet de solidariser définitivement la poche souple 2' à la coque rigide 3' au niveau de l'ouverture du récipient 1'. En d'autres termes, lorsque la poche 2' va se décoller de la coque rigide 3', la poche souple 2' va tout de même rester solidaire de la coque rigide 3 au niveau de la collerette 23. De préférence, la matière constitutive de la coque rigide 3' s'étend autour de la collerette 23 sur au moins 180°. D'autre part, le fond renforcé 21 de la poche souple 2' est plus rigide que la paroi latérale 22 de la poche souple, de sorte qu'il peut former une sorte de plateau ou de piston permettant de pousser le produit de manière sensiblement linéaire.

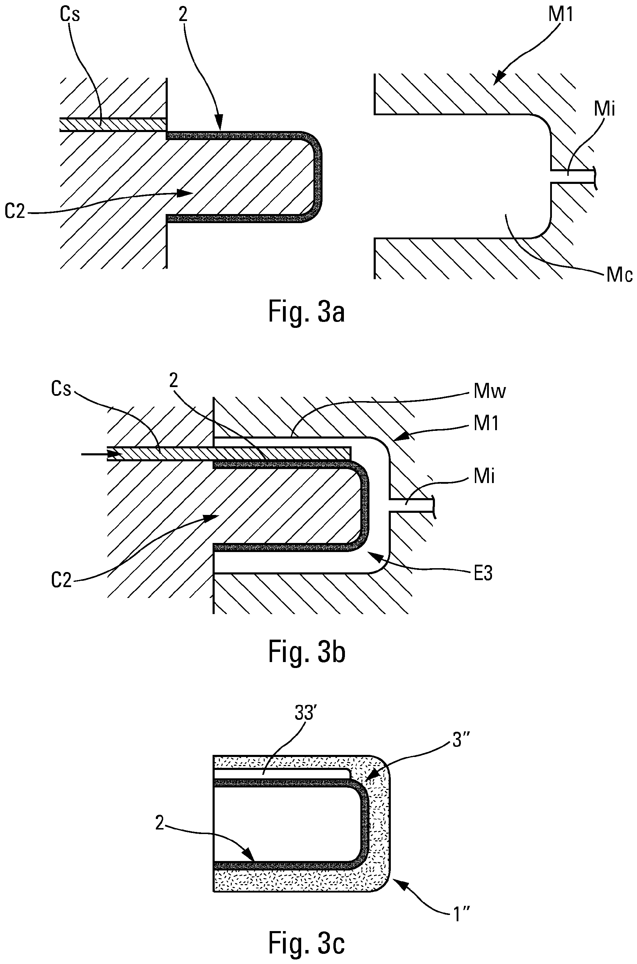

On se référera maintenant aux figures 3a, 3b et 3c pour décrire le troisième mode de réalisation de l'invention. Le moule M1 peut être identique à celui du premier mode de réalisation, formant une cavité Mc et une canule d'injection Mi. Le noyau C2 présente une configuration générale sensiblement identique à celle des noyaux précédents, hormis qu'il intègre en plus une tige coulissante Cs qui est dans sa position rétractée sur la figure 3a. Le noyau C2 est recouvert d'une poche souple 2 qui peut être identique à celle du premier mode de réalisation. Le noyau C2 avec sa poche souple montée dessus peut être engagé dans le moule M1, comme représenté sur la figure 3b. On peut remarquer que la tige coulissante Cs est alors dans sa position étendue dans laquelle elle vient au contact avec la poche souple 2, mais reste hors de contact de la paroi interne Mw du moule M1. En d'autres termes, la tige coulissante Cs s'étend dans l'espace d'injection E3 en contact de la poche 2 et hors de contact du moule M1. La matière plastique en fusion peut alors être injectée dans l'espace d'injection E3 à travers la canule d'injection Mi. Une fois figée, le récipient 1" peut être extrait du moule M1 et éjecté du noyau C2, comme représenté sur la figure 3c. On peut alors observer que la coque rigide 3" est formée avec un passage d'éventation 33' qui s'étend le long de la poche souple 2 et qui débouche au niveau du bord annulaire supérieur du récipient 1". Ce passage d'éventation 33', tout comme le trou d'éventation 33, a pour fonction de permettre à de l'air extérieur de pénétrer entre la poche souple 2 et la coque rigide afin de permettre le décollement de la poche à mesure qu'elle se vide.

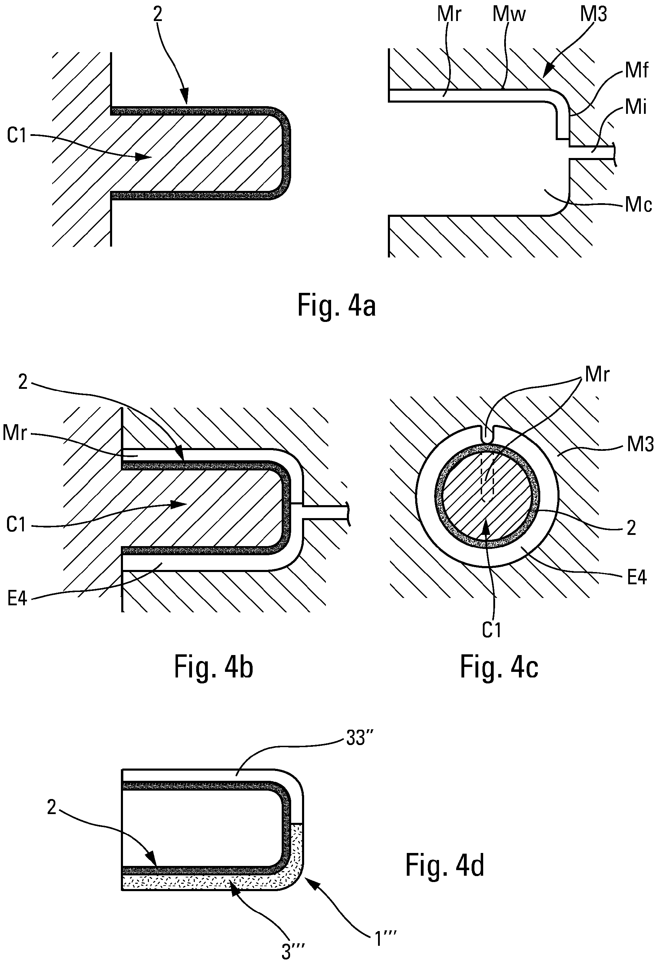

On se référera maintenant aux figures 4a à 4d pour décrire un quatrième mode de réalisation de l'invention. Le noyau C1 et la poche 2 peuvent être sensiblement identiques à ceux du premier mode de réalisation. Quant au moule M3, il se distingue par la présence d'une nervure Mr qui s'étend axialement le long de la paroi latérale Mw et qui s'étend même au niveau du fond Mf. Cette nervure Mr est également visible sur la figure 4c. Une fois le noyau C1 avec sa poche souple 2 engagé à l'intérieur du moule M3, on peut voir que la nervure Mr s'étend jusqu'au contact de la poche 2. On peut ainsi dire que l'espace d'injection E4 est localement interrompu par cette nervure Mr. La matière plastique en fusion peut alors être injectée dans l'espace E4 pour former la coque rigide 3"'. Une fois éjecté du moule M3 et du noyau C1, le récipient 1"', visible sur la figure 4d, forme une rainure d'éventation 33" qui interrompt localement la coque 3'". Cette rainure d'éventation 33" s'étend ici sur la totalité de la paroi latérale ainsi qu'au niveau de la paroi de fond de la coque 3"'. Pour des raisons esthétiques, il sera préférable de masquer cette rainure d'éventation 33" avec un décor appliqué sur la coque 3'".

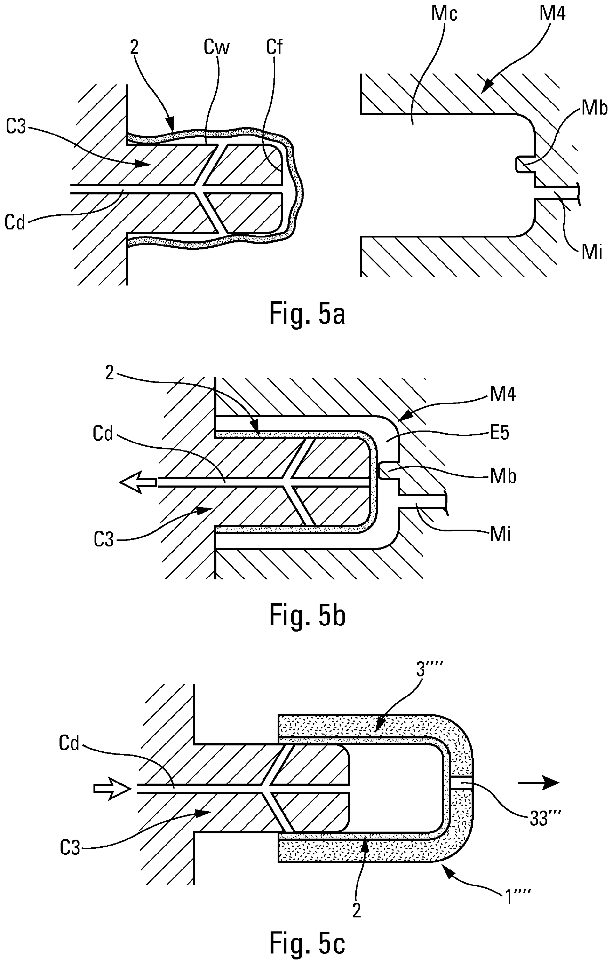

On se référera aux figures 5a à 5c pour décrire le cinquième mode de réalisation. Le moule M4 définit une cavité interne Mc ainsi qu'une canule d'injection Mi. En outre, il forme un téton saillant Mb qui est ici formé au niveau de la paroi de fond du moule. La fonction de ce téton Mb est de réaliser un orifice d'éventation, tout comme dans le deuxième mode de réalisation de l'invention.

Le noyau C3 diffère des noyaux précédents en ce qu'il comprend un conduit interne Cd qui débouche au niveau de la paroi externe recouverte par la poche souple 2. Le conduit interne Cd peut être unique, ou également se présenter sous la forme d'un réseau, comme c'est le cas sur la figure 5a. On peut voir que le conduit interne Cd débouche au niveau de la paroi de fond Cf ainsi qu'au niveau de la paroi latérale Cw. Le noyau C3 avec sa poche souple 2 peuvent être insérés dans le moule M4, comme représenté sur la figure 5b. Un espace d'injection E5 est ainsi formé autour de la poche souple 2. On peut remarquer que le téton Mb ne vient pas en contact avec la poche souple 2 : en effet il existe un petit interstice entre le bout du téton Mb et le fond de la poche souple 2, qui peut être de l'ordre du dixième de millimètre. Cet interstice est présent, notamment lorsqu'une dépression est générée dans le conduit Cd, ce qui a pour effet de plaquer fortement la poche souple 2 sur la paroi externe du noyau C3. On assure ainsi que la poche souple 2 épouse de manière intime la forme extérieure du noyau C3. La poche souple 2 peut même légèrement pénétrer à l'intérieur du conduit interne Cd lors de l'application de cette dépression, permettant d'obtenir l'interstice entre le bout du téton Mb et la poche souple. La matière plastique en fusion est alors injectée dans l'espace d'injection E5 tout en maintenant au début l'aspiration à travers le conduit Cd. Il est ensuite possible d'injecter un fluide sous pression dans le conduit Cd pour repousser la poche souple vers l'extérieur, notamment au niveau du téton Mb qui va alors venir en contact de la poche. Ainsi, on peut se servir de ce conduit Cd pour évacuer l'air restant entre la poche et le noyau C3 dans un premier temps, puis pour repousser localement la poche 2 en contact du téton Mb. En variante, il est possible de se passer du téton Mb et de pousser la poche en contact du fond Mf du moule. On peut aussi considérer que le téton Mb fait partie du fond Mf du moule.

Le conduit interne Cd peut également être utilisé lors de l'extraction du récipient 1"" en injectant un fluide sous pression permettant de décoller plus facilement la poche souple 2 du noyau C3. On obtient au final un récipient 1"" avec une poche souple interne et une coque rigide externe 3"" formant un orifice d'éventation 33'".

Quel que soit le mode de réalisation, on obtient un récipient comprenant une poche souple interne appliquée à l'intérieur d'une coque rigide externe, formant éventuellement un orifice ou un passage d'éventation permettant à de l'air extérieur de pénétrer entre la poche et la coque.

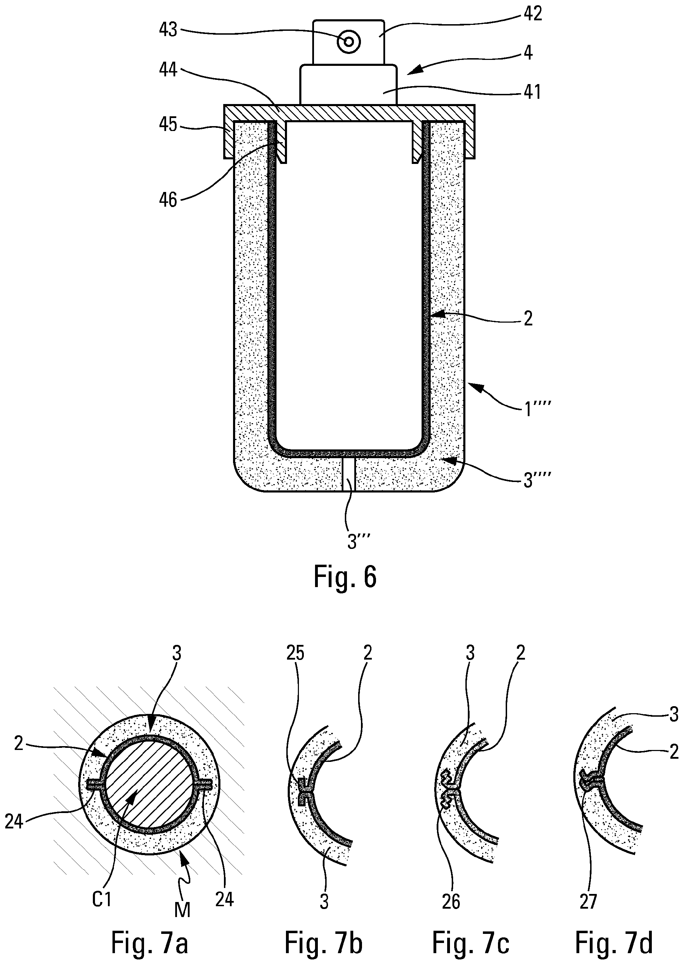

Sur la figure 6, on voit un distributeur de produit fluide comprenant un récipient de l'invention, notamment le récipient 1"" du cinquième mode de réalisation, avec une coque rigide externe 3"" et un trou d'éventation 33'". Toutefois, n'importe quel récipient de l'invention peut être mis en œuvre dans la figure 6.

On peut voir que le distributeur comprend un organe de distribution comprenant une pompe ou une valve 41 sur laquelle est monté un poussoir 42 formant un orifice de distribution 43. L'organe de distribution comprend également une coupelle de fixation 44 formant une jupe externe de fixation 45, ainsi qu'une lèvre intérieure 46 qui vient en contact avec la poche souple 2 de manière à l'appliquer de manière étanche et définitive contre la coque rigide 3"". Par conséquent, on se sert du montage de l'organe de distribution 4 pour assurer la fixation étanche de la poche à l'intérieur de la coque. La poche pourra se décoller de la coque par introduction d'air à travers le trou d'éventation mais restera toutefois solidaire de la coque au niveau de la lèvre interne 46.

On se référera maintenant aux figures 7a, 7b, 7c et 7d pour décrire différentes variantes d'appendices de maintien permettant d'ancrer mécaniquement la poche souple 2 à l'intérieur de la coque rigide 3. Sur la figure 7a, on peut voir que la poche 2 forme deux bords saillants verticaux diamétralement opposés qui sont noyés et pris dans la matière constitutive de la coque rigide 3. Ces deux bords saillants 24 font office d'appendices de maintien permettant de fixer mécaniquement et localement la poche souple 2 à l'intérieur de la coque 3. Ainsi, lorsque la poche 2 va se décoller de la coque 3, sa déformation sera contrôlée et imposée par les appendices de maintien 24. Sur la figure 7a, ces appendices de maintien 24 sont simplement formés par une simple bride saillante. Sur la figure 7b, cet appendice de maintien est formé par deux cornières disposées de manière opposée. Sur la figure 7c, l'appendice de maintien 26 est formé par des brides en zigzag. Enfin, sur la figure 7d, l'appendice de maintien 27 est formé par des brides en forme de points d'interrogation imbriqués. On peut bien entendu imaginer encore d'autres formes de réalisation pour ces appendices de maintien permettant de fixer la poche souple 2 à l'intérieur de la coque 3 en étant pris dans la matière constitutive de la coque 3.

Dans les modes de réalisation qui viennent d'être décrits, la coque et la poche ont été réalisées avec des matières qui sont chimiquement et/ou physiquement incompatibles, dans le but de permettre à la poche de se décoller de la coque, notamment lorsque du produit fluide en est extrait. Ce même but peut également être atteint en mettant en œuvre une interface de décollement entre la poche et la coque, qui génère une incompatibilité chimique et/physique extrinsèque. Cette interface peut être solidaire de la poche, engagée sur la poche déjà montée sur le noyau, ou encore appliquée (par exemple pulvérisée) sur la poche. L'interface de décollement permet le décollement de la poche, mais peut également servir à protéger la poche contre des excès de chaleur diffusée par la matière plastique en fusion. Elle peut donc remplir une double fonction : non adhérence et/ou protection thermique.

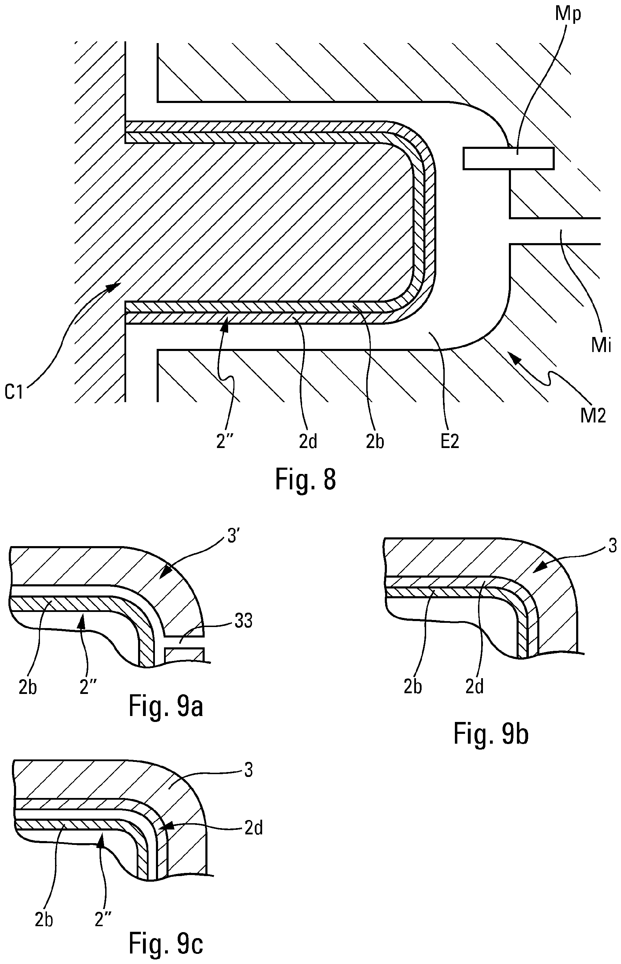

En se référant à la figure 8, on voit un noyau C1 sur lequel est engagée une poche 2" qui comprend une couche de base 2b et une autre couche qui forme l'interface de décollement 2d. Selon la nature de la couche, l'interface de décollement peut être considérée comme faisant, au moins initialement, partie intégrante de la poche : cette couche 2d peut faire partie d'un laminé complexe, être appliquée sur la couche de base ou encore pulvérisée sur la couche de base 2b.

Lorsque le moule M2 est rapporté sur le noyau C1, l'espace d'injection E2 est formé entre le moule M1 et la couche de décollement 2d. La matière plastique en fusion est alors injectée dans cet espace E2, venant ainsi en contact avec la couche de décollement 2d. La chaleur dégagée par la matière plastique en fusion n'affecte pas directement la couche de base 2b, étant donné que la couche de décollement est interposée et emmagasine une partie de la chaleur. Elle remplit ainsi une fonction de protection thermique.

La chaleur va agir différemment sur la couche de décollement 2d en fonction de sa nature. Sur la figure 9a, la couche de décollement 2d a disparu, ne laissant que la coque 3' et la couche de base 2b. La couche de décollement 2d, sous forme gazeuse (sublimation) ou liquide (fusion), peut par exemple être évacuée à travers le passage d'éventation 33. Sur la figure 9b, la couche de décollement 2d est toujours présente, sous forme intacte ou altérée. Elle reste solidaire de la couche de base 2b. Sur la figure 9c, la couche de décollement 2d est solidaire de la coque 3 et se décolle donc de la couche de base 2b. Dans tous les cas, la couche de décollement 2d, qu'elle remplisse une fonction supplémentaire de protection thermique ou non, permet ou n'entrave pas la non-adhérence de la poche à la coque. Les matériaux constitutifs de la couche de base 2b et de la coque peuvent être chimiquement et/ou physiquement incompatibles, ou non. En effet, la couche de décollement 2d peut garantir à elle seule la non-adhérence, alors que les matériaux constitutifs de la couche de base 2b et de la coque sont chimiquement et/ou physiquement compatibles.

Dans le cadre de l'invention, l'incompatibilité chimique et/ou physique entre la poche et la coque peut être considérée comme une interface de décollement intrinsèque, alors que la couche de décollement 2d est une interface de décollement extrinsèque, garantissant la non-adhérence de la poche à la coque, de sorte à permettre son décollement ultérieur à mesure qu'elle est vidée de son contenu.

Il va de soi que la poche 2" peut être mise en œuvre avec n'importe quel noyau C1, C2 ou C3 et avec n'importe quel moule M1, M2, M3 ou M4.

Grâce à l'invention, on obtient un récipient avec une poche souple et une coque rigide dont la forme extérieure de la coque rigide est totalement indépendante et décorrélée de la forme de la poche. De plus, le procédé de l'invention permet de réaliser lors du moulage un orifice ou un passage d'éventation. En outre, il est possible de former la poche avec des appendices de maintien qui sont noyés et pris dans la masse constitutive de la coque. La mise en œuvre d'une interface de décollement extrinsèque permet en outre de protéger thermiquement la poche lors du moulage.

## Revendications

1. Procédé de fabrication d'un récipient (1 ; 1' ; 1" ; 1'" ; 1""), comprenant une poche souple (2 ; 2') et une coque rigide (3 ; 3' ; 3" ; 3'" ; 3""), destiné à être associé à un organe de distribution (4), pour constituer un distributeur de produit fluide, le procédé étant **caractérisé par** les étapes suivantes :
- fournir un noyau (C1 ; C2 ; C3) ayant une paroi externe (Cw ; Cf),
- engager la poche souple (2 ; 2') autour du noyau (C1 ; C2 ; C3) de sorte qu'elle recouvre au moins une partie de la paroi externe (Cw ; Cf),
- fournir un moule (M1 ; M2 ; M3 ; M4) ayant une paroi interne (Mw ; Mf) définissant une cavité interne (Mc),
- disposer le noyau (C1 ; C2 ; C3), avec sa poche souple (2 ; 2') engagée autour, dans la cavité interne (Mc) du moule (M1 ; M2 ; M3 ; M4), de manière à définir un espace d'injection (E1 ; E2 ; E3 ; E4 ; E5) entre la paroi interne (Mw ; Mf) du moule (M1 ; M2 ; M3 ; M4) et la poche souple (2 ; 2'),
- injecter une matière plastique en fusion dans l'espace d'injection (E1 ; E2 ; E3 ; E4 ; E5) de manière à former la coque rigide (3 ; 3' ; 3" ; 3'" ; 3"") autour de la poche souple (2 ; 2'), la poche souple (2 ; 2') et la coque rigide (3 ; 3' ; 3" ; 3'" ; 3"") étant réalisées avec deux matières plastiques différentes qui sont chimiquement incompatibles, de sorte que la poche souple (2 ; 2') puisse se décoller de la coque rigide (3 ; 3' ; 3"; 3'"; 3"").

2. Procédé de fabrication d'un récipient (1), comprenant une poche souple (2") et une coque rigide (3), destiné à être associé à un organe de distribution (4), pour constituer un distributeur de produit fluide, le procédé étant **caractérisé par** les étapes suivantes :
- fournir un noyau (C1 ; C2 ; C3) ayant une paroi externe (Cw ; Cf),
- engager la poche souple (2") autour du noyau (C1 ; C2 ; C3) de sorte qu'elle recouvre au moins une partie de la paroi externe (Cw ; Cf),
- fournir un moule (M1 ; M2 ; M3 ; M4) ayant une paroi interne (Mw ; Mf) définissant une cavité interne (Mc),
- disposer le noyau (C1 ; C2 ; C3), avec sa poche souple (2) engagée autour, dans la cavité interne (Mc) du moule (M1 ; M2 ; M3 ; M4), de manière à définir un espace d'injection (E1 ; E2 ; E3 ; E4 ; E5) entre la paroi interne (Mw ; Mf) du moule (M1 ; M2 ; M3 ; M4) et la poche souple (2"),
- injecter une matière plastique en fusion dans l'espace d'injection (E1 ; E2 ; E3 ; E4 ; E5) de manière à former la coque rigide (3) autour de la poche souple (2"), la poche souple (2") et la coque rigide (3) définissant entre elles une interface de décollement (2d) permettant à la poche souple (2") de se décoller de la coque rigide (3).

3. Procédé de fabrication selon la revendication 2, dans lequel l'interface de décollement (2d) est une couche solidaire de la poche (2") lors de l'injection de la matière plastique en fusion dans l'espace d'injection (E1 ; E2 ; E3 ; E4 ; E5) pour former la coque rigide (3).

4. Procédé de fabrication selon la revendication 2 ou 3, dans lequel l'interface de décollement (2d) change d'état sous l'effet de la chaleur diffusée par la matière plastique en fusion, l'interface de décollement (2d) étant avantageusement sublimable ou fusible ou encore apte à adhérer à la coque rigide (3).

5. Procédé de fabrication l'une quelconque des revendications précédentes, dans lequel la paroi interne (Mw ; Mf) du moule (M1 ; M2 ; M3 ; M4) a une forme différente de la paroi externe (Cw ; Cf) du noyau (C1 ; C2 ; C3).

6. Procédé de fabrication l'une quelconque des revendications précédentes, dans lequel la poche souple (2 ; 2' ; 2") est élastiquement déformable, de sorte qu'une fois engagée autour du noyau (C1 ; C2 ; C3), elle épouse la paroi externe (Cw ; Cf) du noyau (C1 ; C2 ; C3) sans former de plis.

7. Procédé de fabrication l'une quelconque des revendications précédentes, dans lequel la poche souple (2 ; 2' ; 2") forme au moins un appendice de maintien (23 ; 24 ; 25 ; 26 ; 27) qui fait saillie dans l'espace d'injection (E1 ; E2 ; E3 ; E4 ; E5), de manière à être noyé et pris dans la matière plastique constitutive de la coque rigide (3 ; 3' ; 3" ; 3'" ; 3"").

8. Procédé de fabrication selon la revendication 7, dans lequel la poche souple (2 ; 2' ; 2") comprend deux appendices de maintien (24 ; 25 ; 26 ; 27) qui s'étendent de manière diamétralement opposée de chaque côté de la poche souple (2 ; 2' ; 2"), pour induire une déformation déterminée de la poche souple (2 ; 2' ; 2") à mesure qu'elle s'écrase sur elle-même.

9. Procédé de fabrication selon l'une quelconque des revendications précédentes, dans lequel un profil saillant (Mp ; Mr ; Mb ; Cs), avantageusement élastiquement déformable, est solidaire du moule (M2 ; M3 ; M4) ou du noyau (C2), ce profil saillant (Mp ; Mr ; Mb ; Cs) est destiné à venir en contact de la poche souple (2 ; 2' ; 2"), lorsque la matière plastique en fusion est injectée dans l'espace d'injection (E2 ; E3 ; E4), de manière à former un orifice ou passage d'éventation (33' ; 33" ; 33"' ; 33"") dans la coque rigide (3' ; 3" ; 3'" ; 3"") qui va permettre à de l'air extérieur de pénétrer entre la poche souple (2 ; 2' ; 2") et la coque rigide (3' ; 3" ; 3'" ; 3"") à mesure que la poche souple (2 ; 2') s'écrase sur elle-même, la poche souple (2 ; 2' ; 2") présentant avantageusement une épaisseur de paroi accrue à l'endroit où le profil saillant (Mp ; Mr ; Mb ; Cs) vient en contact de la poche souple (2 ; 2' ; 2").

10. Procédé de fabrication selon l'une quelconque des revendications précédentes, dans lequel le noyau (C3) comprend au moins un conduit interne (Cd) qui débouche au niveau de la paroi externe (Cw ; Cf).

11. Procédé de fabrication selon la revendication 10, dans lequel une dépression est générée dans le conduit interne (Cd) pour plaquer la poche souple (2) contre la paroi externe (Cw ; Cf) du noyau (C3).

12. Procédé de fabrication selon la revendication 10 ou 11, dans lequel un fluide est injecté sous pression dans le conduit interne (Cd) pour pousser localement la poche souple (2) en contact du moule (M4), de manière à former un orifice d'éventation (33"') dans la coque rigide (3"") qui va permettre à de l'air extérieur de pénétrer entre la poche souple (2) et la coque rigide (3"") à mesure que la poche souple (2) s'écrase sur elle-même.

13. Procédé de fabrication selon la revendication 10, 11 ou 12, dans lequel un fluide est injecté sous pression dans le conduit interne (Cd) pour décoller le récipient du noyau (C3), une fois la coque rigide figée.

14. Récipient obtenu par le procédé selon les revendications 7 ou 8, dans lequel ledit au moins un appendice de maintien (23 ; 24 ; 25 ; 26 ; 27) est entouré par la coque rigide (C1) sur au moins 180°.

15. Distributeur de produit fluide comprenant un récipient (1 ; 1' ; 1" ; 1'" ; 1"") réalisé selon le procédé selon l'une des revendications 1 à 13, et un organe de distribution (4), tel qu'une pompe ou une valve, qui est monté sur le récipient (1 ; 1' ; 1" ; 1'" ; 1"") de manière étanche, l'organe de distribution (4) venant en contact avec la poche souple (2 ; 2' ; 2"), en l'appuyant contre la coque rigide (3 ; 3' ; 3" ; 3'" ; 3"") de sorte que la poche souple (2 ; 2' ; 2") est ainsi maintenue dans la coque rigide (3 ; 3' ; 3" ; 3'" ; 3"").

## Patentansprüche

1. Verfahren zur Herstellung eines Behälters (1; 1'; 1"; 1"'; 1""), umfassend eine flexible Tasche (2; 2') und eine starre Schale (3; 3'; 3"; 3"'; 3""), die dafür gedacht ist, einer Ausgabeeinrichtung (4) zugeordnet zu werden, um einen Spender für ein fluides Produkt zu bilden, wobei das Verfahren durch die folgenden Schritte gekennzeichnet ist:
- Bereitstellen eines Kerns (C1; C2; C3), der eine Außenwand (Cw; Cf) aufweist,
- Umlegen der flexiblen Tasche (2; 2') um den Kern (C1; C2; C3) derart, dass sie zumindest einen Teil der Außenwand (Cw; Cf) bedeckt,
- Bereitstellen einer Form (M1; M2; M3; M4) mit einer Innenwand (Mw; Mf), die einen inneren Hohlraum (Mc) definiert,
- Anordnen des Kerns (C1; C2; C3) mit der um diesen umgelegten flexiblen Tasche (2; 2') in dem inneren Hohlraum (Mc) der Form (M1; M2; M3; M4) derart, dass ein Einspritzraum (E1; E2; E3; E4; E5) zwischen der Innenwand (Mw; Mf) der Form (M1; M2; M3; M4) und der flexiblen Tasche (2; 2') definiert wird,
- Einspritzen einer Schmelze aus Kunststoffmaterial in den Einspritzraum (E1; E2; E3; E4; E5), um die starre Schale (3; 3'; 3"; 3"'; 3"") um die flexible Tasche (2; 2') zu bilden, wobei die flexible Tasche (2; 2') und die starre Schale (3, 3'; 3"; 3"'; 3"") aus zwei unterschiedlichen Kunststoffmaterialien hergestellt werden, die chemisch inkompatibel sind, sodass sich die flexible Tasche (2; 2') von der starren Schale (3; 3'; 3"; 3"'; 3"") ablösen kann.

2. Verfahren zur Herstellung eines Behälters (1; 1'; 1"; 1"; 1""), umfassend eine flexible Tasche (2) und eine starre Schale (3), die dafür geeignet ist, einer Ausgabeeinrichtung (4) zugeordnet zu werden, um einen Spender für ein fluides Produkt zu bilden, wobei das Verfahren durch die folgenden Schritte gekennzeichnet ist:
- Bereitstellen eines Kerns (C1; C2; C3), der eine Außenwand (Cw; Cf) aufweist,
- Umlegen der flexiblen Tasche (2") um den Kern (C1; C2; C3) derart, dass sie zumindest einen Teil der Außenwand (Cw; Cf) bedeckt,
- Bereitstellen einer Form (M1; M2; M3; M4) mit einer Innenwand (Mw; Mf), die einen inneren Hohlraum (Mc) definiert,
- Anordnen des Kerns (C1; C2; C3) mit der um diesen umgelegten flexiblen Tasche (2) in dem inneren Hohlraum (Mc) der Form (M1; M2; M3; M4) derart, dass ein Einspritzraum (E1; E2; E3; E4; E5) zwischen der Innenwand (Mw; Mf) der Form (M1; M2; M3; M4) und der flexiblen Tasche (2") definiert wird,
- Einspritzen einer Schmelze aus Kunststoffmaterial in den Einspritzraum (E1; E2; E3; E4; E5), um die starre Schale (3) um die flexible Tasche (2") zu bilden, wobei die flexible Tasche (2") und die starre Schale (3) zwischen sich eine Ablösegrenzfläche (2d) definieren, die es der flexiblen Tasche (2") ermöglicht, sich von der starren Schale (3) abzulösen.

3. Herstellungsverfahren nach Anspruch 2, wobei die Ablösegrenzfläche (2d) beim Einspritzen der Schmelze aus Kunststoffmaterial in den Einspritzraum (E1; E2; E3; E4; E5), um die starre Schale (3) zu bilden, eine Schicht ist, die mit der Tasche (2") einstückig ist.

4. Herstellungsverfahren nach Anspruch 2 oder 3, wobei die Ablösegrenzfläche (2d) unter Einfluss der Wärme, die durch die Schmelze aus Kunststoffmaterial verteilt wird, ihren Zustand ändert, wobei die Ablösegrenzfläche (2d) vorteilhafterweise sublimierbar oder schmelzbar oder auch in der Lage ist, an der starren Schale (3) zu haften.

5. Herstellungsverfahren nach einem der vorstehenden Ansprüche, wobei die Innenwand (Mw; Mf) der Form (M1; M2; M3; M4) eine andere Form hat als die Außenwand (Cw; Cf) des Kerns (C1; C2; C3).

6. Herstellungsverfahren nach einem der vorstehenden Ansprüche, wobei die flexible Tasche (2; 2'; 2") elastisch verformbar ist, sodass sie sich, sobald sie um den Kern (C1; C2; C3) umgelegt worden ist, an die Außenwand (Cw; Cf) des Kerns (C1; C2; C3) schmiegt, ohne Falten zu werfen.

7. Herstellungsverfahren nach einem der vorstehenden Ansprüche, wobei die flexible Tasche (2; 2'; 2") mindestens einen Halteansatz (23; 24; 25; 26; 27) bildet, der derart in den Einspritzraum (E1; E2; E3; E4; E5) vorsteht, dass er eingebettet und in dem die starre Schale (3; 3'; 3"; 3"'; 3"") bildenden Kunststoffmaterial aufgenommen wird.

8. Herstellungsverfahren nach Anspruch 7, wobei die flexible Tasche (2; 2'; 2") zwei Halteansätze (24; 25; 26; 27) umfasst, die sich diametral entgegengesetzt zu jeder Seite der flexiblen Tasche (2; 2'; 2") erstrecken, um eine vorbestimmte Verformung der flexiblen Tasche (2; 2'; 2") in dem Maße zu veranlassen, wie sie in sich zusammenfällt.

9. Herstellungsverfahren nach einem der vorstehenden Ansprüche, wobei ein vorstehendes Profil (Mp; Mr; Mb; Cs), welches vorteilhafterweise elastisch verformbar ist, mit der Form (M2; M3; M4) oder mit dem Kern (C2) einstückig ist, wobei dieses vorstehende Profil (Mp; Mr; Mb; Cs) dafür gedacht ist, mit der flexiblen Tasche (2; 2'; 2") in Kontakt zu geraten, wenn die Schmelze aus Kunststoffmaterial in den Einspritzraum (E2; E3; E4) eingespritzt wird, sodass eine Entlüftungsöffnung oder ein Entlüftungsdurchgang (33'; 33"; 33"'; 33"") in der starren Schale (3'; 3"; 3'"; 3"") gebildet wird, die/der es ermöglicht, dass Außenluft in dem Maße zwischen die flexible Tasche (2; 2'; 2") und die starre Schale (3'; 3"; 3'"; 3""') eindringen kann, wie die flexible Tasche (2; 2') in sich zusammenfällt, wobei die flexible Tasche (2; 2'; 2") vorteilhafterweise eine Wandstärke aufweist, die an der Stelle zunimmt, wo das vorstehende Profil (Mp; Mr; Mb; Cs) mit der flexiblen Tasche (2; 2'; 2") in Kontakt gerät.

10. Herstellungsverfahren nach einem der vorstehenden Ansprüche, wobei der Kern (C3) mindestens einen Innenkanal (Cd) umfasst, der an der Außenwand (Cw; Cf) mündet.

11. Herstellungsverfahren nach Anspruch 10, wobei eine Vertiefung in dem Innenkanal (Cd) erzeugt wird, um die flexible Tasche (2) gegen die Außenwand (Cw; Cf) des Kerns (C3) zu pressen.

12. Herstellungsverfahren nach Anspruch 10 oder 11, wobei ein Fluid unter Druck in den Innenkanal (Cd) eingespritzt wird, um die flexible Tasche (2) lokal in Kontakt mit der Form (M4) zu schieben, sodass eine Entlüftungsöffnung (33"') in der starren Schale (3"') gebildet wird, die es der Außenluft ermöglicht, in dem Maße zwischen die flexible Tasche (2) und die starre Schale (3"") einzudringen, wie die flexible Tasche (2) in sich zusammenfällt.

13. Herstellungsverfahren nach Anspruch 10, 11 oder 12, wobei ein Fluid unter Druck in den Innenkanal (Cd) eingespritzt wird, um den Behälter vom Kern (C3) abzulösen, sobald die starre Schale erstarrt ist.

14. Behälter, erhalten durch das Verfahren nach den Ansprüchen 7 oder 8, wobei der mindestens eine Halteansatz (23; 24; 25; 26; 27) über mindestens 180° von der starren Schale (C1) umgeben ist.

15. Spender für ein fluides Produkt, umfassend einen Behälter (1; 1'; 1"; 1"'; 1""), der gemäß dem Verfahren nach einem der Ansprüche 1 bis 13 hergestellt wurde, und eine Ausgabeeinrichtung (4), wie eine Pumpe oder ein Ventil, die auf dem Behälter (1; 1'; 1"; 1"'; 1"") dicht montiert ist, wobei die Ausgabeeinrichtung (4) mit der flexiblen Tasche (2; 2'; 2") in Kontakt gerät, indem sie sie derart gegen die starre Schale (3; 3'; 3"; 3"'; 3"") drückt, dass die flexible Tasche (2; 2'; 2") somit in der starren Schale (3; 3'; 3"; 3"'; 3"") gehalten wird.

## Claims

1. A method for manufacturing a container (1; 1'; 1"; 1"'; 1""), comprising a flexible pouch (2; 2') and a rigid shell (3; 3'; 3"; 3"'; 3""), intended to be associated with a dispensing member (4), in order to constitute a fluid product dispenser, the method being **characterized by** the following steps:
- providing a core (C1; C2; C3) having an outer wall (Cw; Cf),
- engaging the flexible pouch (2; 2') around the core (C1; C2; C3) so that it covers at least part of the outer wall (Cw; Cf)
- providing a mold (M1; M2; M3; M4) having an inner wall (Mw; Mf) defining an inner cavity (Mc),
- disposing the core (C1; C2; C3), with its flexible pouch (2; 2') engaged therearound, in the inner cavity (Mc) of the mold (M1; M2; M3; M4), so as to define an injection space (E1; E2; E3; E4; E5) between the inner wall (Mw; Mf) of the mold (M1; M2; M3; M4) and the flexible pouch (2; 2'),
- injecting a molten plastic material into the injection space (E1; E2; E3; E4; E5) so as to form the rigid shell (3; 3'; 3"; 3"'; 3"") around the flexible pouch (2; 2'), the flexible pouch (2; 2') and the rigid shell (3; 3'; 3"; 3"'; 3"") being made of two different plastic materials that are chemically incompatible, so that the flexible pouch (2; 2') can be detached from the rigid shell (3; 3'; 3"; 3"'; 3"").

2. A method for manufacturing a container (1), comprising a flexible pouch (2") and a rigid shell (3), intended to be associated with a dispensing member (4), in order to constitute a fluid product dispenser, the method being **characterized by** the following steps:
- providing a core (C1; C2; C3) having an outer wall (Cw; Cf),
- engaging the flexible pouch (2") around the core (C1; C2; C3) so that it covers at least part of the outer wall (Cw; Cf),
- providing a mold (M1; M2; M3; M4) having an inner wall (Mw; Mf) defining an inner cavity (Mc),
- disposing the core (C1; C2; C3), with its flexible pouch (2) engaged therearound, in the inner cavity (Mc) of the mold (M1; M2; M3; M4), so as to define an injection space (E1; E2; E3; E4; E5) between the inner wall (Mw; Mf) of the mold (M1; M2; M3; M4) and the flexible pouch (2"),
- injecting a molten plastic material into the injection space (E1; E2; E3; E4; E5) so as to form the rigid shell (3) around the flexible pouch (2"), the flexible pouch (2") and the rigid shell (3) defining therebetween a detachment interface (2d) allowing the flexible pouch (2") to be detached from the rigid shell (3).

3. The manufacturing method according to claim 2, wherein the detachment interface (2d) is a layer secured to the pouch (2") during injection of the molten plastic material into the injection space (E1; E2; E3; E4; E5) to form the rigid shell (3).

4. The manufacturing method according to claim 2 or 3, wherein the detachment interface (2d) changes state under the effect of heat diffused by the molten plastic material, the detachment interface (2d) being advantageously sublimable or meltable or able to adhere to the rigid shell (3).

5. The manufacturing method according to any one of the preceding claims, wherein the inner wall (Mw; Mf) of the mold (M1; M2; M3; M4) has a shape different from the outer wall (Cw; Cf) of the core (C1; C2; C3).

6. The manufacturing method according to any one of the preceding claims, wherein the flexible pouch (2; 2'; 2") is elastically deformable, so that once engaged around the core (C1; C2; C3), it conforms to the outer wall (Cw; Cf) of the core (C1; C2; C3) without forming any folds.

7. The manufacturing method according to any one of the preceding claims, wherein the flexible pouch (2; 2'; 2") forms at least one holding appendage (23; 24; 25; 26; 27) protruding into the injection space (E1; E2; E3; E4; E5) so as to be embedded and taken from the plastic material constituting the rigid shell (3; 3'; 3"; 3"'; 3"").

8. The manufacturing method according to claim 7, wherein the flexible pouch (2; 2'; 2") comprises two holding appendages (24; 25; 26; 27) extending in diametrically opposite manner on each side of the flexible pouch (2; 2'; 2") to induce a determined deformation of the flexible pouch (2; 2'; 2") as it flattens onto itself.

9. The manufacturing method according to any one of the preceding claims, wherein an advantageously elastically deformable protruding profile (Mp; Mr; Mb; Cs) is secured to the mold (M2; M3; M4) or core (C2), this protruding profile (Mp; Mr; Mb; Cs) is intended to come into contact with the flexible pouch (2; 2'; 2") when the molten plastic material is injected into the injection space (E2; E3; E4), so as to form a hole or a vent passage (33', 33", 33"', 33"") in the rigid shell (3'; 3"; 3'"; 3"") that will allow outside air to enter between the flexible pouch (2; 2'; 2") and the rigid shell (3'; 3"; 3'"; 3"") as the flexible pouch (2; 2') flattens on itself, the flexible pouch (2; 2'; 2") advantageously having an increased wall thickness at the location where the protruding profile (Mp; Mr; Mb; Cs) comes into contact with the flexible pouch (2; 2'; 2").

10. The manufacturing method according to any one of the preceding claims, wherein the core (C3) comprises at least one inner duct (Cd) which opens at the outer wall (Cw; Cf).

11. The manufacturing method according to claim 10, wherein a depression is generated in the inner duct (Cd) to plate the flexible pouch (2) against the outer wall (Cw; Cf) of the core (C3).

12. The manufacturing method according to claim 10 or 11, wherein a fluid is injected under pressure into the inner duct (Cd) to locally push the flexible pouch (2) into contact with the mold (M4), so as to form a vent hole (33'") in the rigid shell (3"") that will allow outside air to enter between the flexible pouch (2) and the rigid shell (3"") as the flexible pouch (2) flattens on itself.

13. The manufacturing method according to claim 10, 11 or 12, wherein a fluid is injected under pressure into the inner duct (Cd) to detach the container from the core (C3) once the rigid shell is hardened.

14. A container obtained by the method according to claim 7 or 8, wherein said at least one holding appendage (23; 24; 25; 26; 27) is surrounded by the rigid shell (C1) over at least 180°.

15. A fluid product dispenser comprising a container (1; 1'; 1"; 1'" 1"") made according to the method according to any of claims 1 to 13, and a dispensing member (4), such as a pump or a valve, which is mounted on the container (1; 1'; 1"; 1"'; 1"") in a sealed manner, the dispensing member (4) coming into contact with the flexible pouch (2; 2'; 2"), by pressing it against the rigid shell (3; 3'; 3"; 3"'; 3"") so that the flexible pouch (2; 2'; 2") is thus held in the rigid shell (3; 3'; 3"; 3"'; 3"").
